(19) Europäisches Patentamt
European Patent Office
Office européen des brevets

(11) **EP 2 810 105 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(51) Int Cl.:
*G01V 8/20* (2006.01)        *G01S 7/497* (2006.01)
*G01S 17/02* (2006.01)        *G01S 7/481* (2006.01)
*H04B 10/073* (2013.01)        *H04B 10/2575* (2013.01)

(21) Anmeldenummer: **12813358.4**

(22) Anmeldetag: **21.12.2012**

(86) Internationale Anmeldenummer:
**PCT/EP2012/076608**

(87) Internationale Veröffentlichungsnummer:
**WO 2013/113456 (08.08.2013 Gazette 2013/32)**

(54) **KOMPENSATION EINES OPTISCHEN SENSORS ÜBER DIE LEITERPLATTE**

COMPENSATION OF AN OPTICAL SENSOR ON A PRINTED BOARD

COMPENSATION D'UN CAPTEUR OPTIQUE SUR UNE CARTE DE CIRCUIT IMPRIMÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2012 EP 12153874**
**05.10.2012 EP 12187398**

(43) Veröffentlichungstag der Anmeldung:
**10.12.2014 Patentblatt 2014/50**

(73) Patentinhaber: **Mechaless Systems GmbH**
**76646 Bruchsal (DE)**

(72) Erfinder: **SCHWENINGER, Erhard**
**76149 Karlsruhe (DE)**

(74) Vertreter: **Durm & Partner**
**Patentanwälte**
**Moltkestrasse 45**
**76133 Karlsruhe (DE)**

(56) Entgegenhaltungen:
**EP-B1- 0 706 648        DE-A1- 10 001 955**
**DE-A1- 10 211 307        DE-A1- 10 322 552**
**DE-A1-102005 045 993**

**Beschreibung**

Die vorliegende Erfindung betrifft eine opto-elektronische Messanordnung mit den Merkmalen des Oberbegriffs des Anspruchs 1.

Eine derartige opto-elektronische Messanordnung arbeitet nach dem sogenannten HALIOS-Prinzip der ELMOS AG. Dieses im Stand der Technik bekannte Messprinzip ist unter anderem in folgenden Dokumenten beschrieben: US 5,666,037; EP 0 706 648 B1; EP 1 671 160 B1; DE 100 01 955 A1; EP2418512A1.

Die Messanordnung, im Folgenden auch "Sensor" genannt, umfasst neben einer Sendelichtquelle, im Folgenden auch "Sender" genannt, auch eine Kompensationslichtquelle, im Folgenden auch "Kompensator" genannt, wobei beide Lichtquellen bevorzugt abwechselnd von je einem Stromtreiber bestromt in der Sendephase bzw. Kompensationsphase Licht (i. d. R. im IR-Spektrum) aussenden. Hierfür steuert ein Taktgenerator die Stromtreiber mit vorzugsweise um 180° gegeneinander phasenversetzten Taktsignalen an. Die Frequenz kann im Bereich von einigen kHz bis zu mehreren zehn MHz liegen.

Ein optischer Empfänger empfängt mit einer Photodiode, im Folgenden auch "PD" genannt, einen Teil des von den beiden Lichtquellen ausgesendeten Lichts und wandelt dieses in Strom-Wechselsignale um, die - nach der Trennung von Gleichstrom- und niederfrequenten Signal-Anteilen (herrührend im Allgemeinen vom Umgebungslicht) - durch eine Hochpassfunktion (z.B. Kondensator) auf einen Transimpedanzverstärker (TIA) geführt werden, der diese Stromsignale in Spannungen umwandelt. Diese Spannungen wiederum werden in einem synchronen Demodulator wieder abwechselnd der Sende- und Kompensationsphase zugeordnet und auf einen Regler geführt, der die Aufgabe hat, für die beiden zeitlich aufeinanderfolgenden Signalanteile gleiche Amplituden zu erzeugen. Dafür regelt der Regler die Amplituden der Ströme durch den Kompensator und Sender entsprechend. Es kann - je nach Anwendung - bei konstanter Sender-Stromamplitude nur die Amplitude des Kompensator-Stromes geregelt werden, oder umgekehrt, bei konstanter Kompensator-Stromamplitude nur die Amplitude des Sender-Stromes. Die Amplituden des Kompensatorstroms liegen in der Regel im Bereich von einigen, wenigen mA. Die Sender-Stromamplituden können - je nach Anwendung - im Bereich von einigen mA bis mehreren hundert mA liegen.

Das vom Sender in die Umgebung des Sensors abgestrahlte Licht trifft außerhalb des Sensors auf das zu messende (zu detektierende) Objekt, welches einen Teil des auftreffenden Lichts zurück zur Photodiode des Sensors reflektiert. Das Verhältnis gebildet aus dem empfangenen Strom in der Photodiode und dem dafür eingesetzten Senderstrom ist der optische Kopplungsfaktor der Sender-Messobjekt-Photodiode-Strecke, den der Sensor ermittelt und in seinem Regler-Stellsignal abbildet.

Der Kompensator (Kompensationslichtquelle) ist so realisiert, dass das von ihm abgestrahlte Licht das Messobjekt nicht erreichen kann, sondern im Inneren des Sensors zur Photodiode geleitet wird. Dazu wird in der Regel innerhalb des Sensors ein Lichtwellenleiter oder ein anderer optischer Leiter installiert, der das Licht von dem Kompensator (direkt) zum Empfänger, in der Regel eine Photodiode, leitet. In der praktischen Umsetzung wird der vom Kompensator abgestrahlte Lichtanteil auf ein vordefiniertes Maß eingestellt, so dass lediglich ein gewisser (i. d. R. kleiner) Teil des abgestrahlten Lichts während der Kompensationsphase auf die Photodiode des Sensors trifft. Das Verhältnis, von dem aus diesem Lichtanteil in der Photodiode generierten Strom zu dem dafür eingesetzten Kompensationsstrom, ist der optische Kopplungsfaktor der Kompensator-Photodiode-Strecke. Er ist konstant, da das vom Kompensator abgestrahlte Licht im Wesentlichen nicht zum Messobjekt gelangt. Somit stellt das Kompensationssignal eine unveränderliche Größe oder Referenz für die Messung dar.

Neben den hier beschriebenen zeitsequentiellen, getakteten Signalen können selbstverständlich auch andere Signale verwendet werden, solange sie geeignet sind, um eine rückgekoppelte Kompensation des Empfängerausgangssignals zu verwirklichen.

Aus dem Stand der Technik stellt sich die Aufgabe, eine optimierte und gleichzeitig kostengünstige Messanordnung vorzuschlagen, die nach einem Kompensationsprinzip arbeitet, insbesondere nach dem HALIOS-Kompensationsprinzip. Die Messanordnung soll möglichst einfach sowie kompakt gestaltet sein.

Gelöst wird die Aufgabe mit einer optoelektronischen Messanordnung mit den Merkmalen des Anspruchs 1. Dieses Sensorsystem, das weitgehend fremdlichtunabhängig arbeitet, umfasst einen Sender, einen Kompensationssender und einen Empfänger, der ein Sendesignal des Senders und ein Kompensationssignal des Kompensators linear überlagert empfangen und ein Empfängerausgangssignal erzeugen kann. Der Sender sendet ein Sendesignal durch eine erste Übertragungsstrecke, deren Übertragungseigenschaften bestimmt werden sollen, an den Empfänger. Das Kompensationssignal erreicht den Empfänger nach Durchgang durch eine zweite Übertragungsstrecke. Der Empfänger umfasst bevorzugt wenigstens eine Empfangsdiode oder Photodiode. Er kann auch eine Empfangseinheit sein, die z. B. zusätzlich einen Kondensator und/oder Verstärker aufweist. Andere Ausführungen eines Empfängers sind möglich.

In einer technischen Umsetzung umfasst ein derartiges Sensorsystem bevorzugt eine Sendelichtquelle und eine Kompensationslichtquelle, die Licht zeitsequentiell getaktet phasenweise aussenden. Das ausgesendete Licht ist jeweils gegeneinander phasenverschoben, bevorzugt um 180 Grad. Ein optischer Empfänger mit einer Photodiode zum Empfangen von Licht, das ein von den Lichtquellen ausgesendetes taktsynchrones Messsignal umfasst, ist ebenso Teil des Sensorsystems wie ein Taktgenerator, der ein Taktsignal erzeugt, und eine Verstärkereinheit zum Verstärken eines auf dem empfangenen Messsignal beruhenden Messsignalstroms. Eine taktsynchrone Auswertung des Messsignalstroms erfolgt mittels eines Demodulators. Eine regelbare Stromquelle erzeugt einen getakteten Sendesteuerstrom für die Sendelichtquelle. Eine regelbare Kompensationsstromquelle erzeugt einen getakteten Kompensationssteuerstrom für die Kompensationslichtquelle.

Eine Reglereinheit der erfindungsgemäßen optoelektronischen Messeinrichtung erzeugt aus dem Empfängerausgangssignal ein Kompensationssteuersignal zur Ansteuerung des Kompensationssenders und/oder ein Sendersteuersignal zur Ansteuerung des Senders zur rückkoppelnden Regelung des Empfängerausgangssignals. Die Regelung erfolgt derart, dass bei einer Änderung der Übertragungseigenschaften der ersten Übertragungsstrecke das Empfängerausgangssignal im Wesentlichen unverändert bleibt, sich also nach kurzer Zeit (i.d.R. nach wenigen Micro- oder Millisekunden, beispielsweise nach höchstens 100 μsec, bevorzugt nach höchstens 10 μsec) wieder auf den Wert einstellt, der vor Änderung der Übertragungseigenschaften eingestellt war. Eine Änderung der Übertragungseigenschaften wird beispielsweise durch die Bewegung eines Objekts in der Übertragungsstrecke hervorgerufen.

Die Reglereinheit kann typischerweise wenigstens ein Ansteuersignal für die regelbare Sendelichtquelle und/oder die Kompensationslichtquelle erzeugen. Sie ist bevorzugt derart ausgebildet, dass die Sendelichtquelle zur Steuerung des Sendesteuerstroms und/oder die Kompensationslichtquelle zur Steuerung des Kompensationssteuerstroms in ihrer Lichtintensität regelbar sind. Bevorzugt wird bei der Lichtintensität die Amplitude so geregelt, dass deren Differenz verschwindet. Die Regelung kann auch derart erfolgen, dass die zwischen den unterschiedlichen Phasen auftretende taktsynchrone Signaldifferenz zu Null wird.

Im Rahmen der Erfindung stellte sich auch allgemein die Frage nach einer kostengünstigen und kompakten Sensor-Realisierung, insbesondere einer Kompensator-Realisierung mit möglichst geringem Hardware- und Montageaufwand. Es wurde erkannt, dass der bis zu dem Zeitpunkt der Erfindung insbesondere bei kompakten Schaltungsanordnungen verwendete dedizierte Lichtleiter für die Kompensatorankopplung in vielen Anwendungsfällen entbehrlich bzw. wie hier beschrieben ersetzbar ist. Die bekannten separaten Lichtleiter sind aufwendig zu montieren, da eine hinreichende optische Ankopplung notwendig ist, empfindlich gegen mechanische Beanspruchungen und erzeugen zusätzliche Kosten. Selbstverständlich kann bei speziellen Anwendungen zusätzlich ein dedizierter Lichtwellenleiter vorgesehen sein.

Kompensationsmethoden, wie die HALIOS-Methode, erfordert ein Kompensations-Signal, das bevorzugt in der Kompensations-LED erzeugt und derart geregelt wird, dass es genau so groß wird, wie das vom Sender ausgesendete und dann von einem Messobjekt zum Empfänger (z.B. Photodiode oder Empfangsdiode) übertragene (reflektierte) Lichtsignal. In der praktischen Realisierung werden die Bauteile Empfänger, Kompensationslichtquelle und Sendelichtquelle häufig auf oder an einer Leiterplatte bzw. Platine (Printed Circuit Board, PCB) angeordnet.

Zwischen der Kompensationslichtquelle (Kompensationssender) und dem Empfänger besteht erfindungsgemäß eine Kopplung derart, dass sie wenigstens teilweise mittels eines optischen Systems in der Leiterplatte erfolgt. Die Kompensationslichtquelle und der Empfänger sind jeweils an der Leiterplatte angeordnet. Die Kompensationslichtquelle kann auf der Leiterplatte oder an einer ihrer Seiten angeordnet sein. Im Sinne der Erfindung ist ein optisches System in der Leiterplatte eine Anordnung in der Leiterplatte, die optische Strahlung, z.B. Licht (sichtbar oder nicht sichtbar), in der Leiterplatte weiterleitet und somit transportiert. Dies kann beispielsweise eine Glasfaser in der Leiterplatte, ein Kanal in der Leiterplatte oder eine ähnliche Struktur sein.

Vorzugsweise ist der Empfänger ebenfalls an einer Außenseite der Leiterplatte angeordnet. Er kann auch in einer Bohrung der Leiterplatte positioniert sein oder teilweise in eine Bohrung, insbesondere eine Durchgangsbohrung, hineinragen. Der Empfänger kann beispielweise eine Empfangsdiode bzw. Photodiode sein.

Bei der vorliegenden Erfindung wird also auf einen separaten (externen) Lichtleiter zur Übertragung des Lichts von dem Kompensator zum Empfänger verzichtet. Stattdessen wird das (notwendige) Kompensationslicht durch ein optisches System innerhalb der Leiterplatte von der Kompensations-LED zur Photodiode geleitet. Bevorzugt ist das optische System ein kompensatorisches, optisches Lichtleitersystem. Es kann beispielsweise Kanäle oder Bohrungen innerhalb der Leiterplatte umfassen oder einen integrierten Lichtwellenleiter. Die Leiterplatte kann optional optische oder mechanische Strukturen in ihrem Inneren aufweisen, z.B. eingelassene vorzugsweise metallische Gitter oder Metallisierungen, Durchkontaktierungen, die in der Regel als Durchgangsbohrung mit Metallbeschichtung ausgeführt sind, Schlitze oder Kanäle, mit oder ohne Metallbeschichtung oder andere optisch nicht durchlässige oder teildurchlässige Beschichtungen, wobei sich die optische Durchlässigkeit auf Licht im sichtbaren wie unsichtbaren (z.B. Infrarot-) Bereich bezieht.

In einer bevorzugten Ausführungsform ist das optische System die Leiterplatte selbst. Sie muss dazu nicht verändert oder präpariert werden. Somit ist kein separates Lichtleitersystem notwendig, da die Leiterplatte zur Übertragung des Lichts von dem Kompensator zum Empfänger verwendet wird. Das optische Signal wird wenigstens teilweise, bevorzugt größtenteils, besonders bevorzugt ausschließlich, also nur durch die Leiterplatte zur Photodiode geleitet. "Größtenteils" bedeutet, dass wenigstens 70 % des ausgesandten Lichts des Kompensators (Kompensatorstrahlung) durch das optische System zum Empfänger geleitet wird. Bevorzugt werden wenigstens 80 %, sehr bevorzugt wenigstens 90 % der ausgesandten Strahlung des Kompensators durch das optische System zum Empfänger geleitet. In einigen Ausführungsformen und in bestimmten Leiterplatten bzw. optischen Kanälen werden wenigstens 95 % der im Empfänger empfangenen Kompensatorstrahlung (z.B. Licht bzw. IR-Strahlung) durch das optische System bzw. innerhalb der Leiterplatte geleitet, bevorzugt wenigstens 98 %, besonders bevorzugt wenigstens 99 %. Das optische System kann aber auch ein vorgegebener (beschränkter) Bereich oder Teil in einer Leiterplatte oder z. B. eine Lage einer Leiterplatte sein.

Da die Leiterplatte aus Glasfasern und Bindemittel besteht, eignet sie sich als optisches System und für die optische Leitung von Licht im sichtbaren und nicht sichtbaren Bereich. Bevorzugt besteht sie aus glasfaserverstärktem Polymer, sehr bevorzugt aus glasfaserverstärktem Epoxidharz. Besonders bevorzugt ist FR4-Material. Zusätzlich und/oder alternativ können mechanische Strukturen in der Leiterplatte das optische System (Leiterplatte) unterstützen.

Eine Leiterplatte oder Platine enthält ein Gemisch aus Glasfaserstücken, so dass das in der Leiterplatte transportierte Licht gedämpft und gestreut wird. Die Leiterplatte eignet sich deshalb sehr gut als Lichtleiter für das Kompensationslichtsignal, da hier eine Dämpfung des Signals gewünscht ist. Das von einem Messobjekt zum Empfänger reflektierte Sendesignal ist geringer als das direkt von dem Kompensator zum Empfänger transportierte Signal, bei gleichen Steuer- oder Speisesignalen. Eine Dämpfung durch die Leiterplatte reduziert folglich den Signalpegel des Kompensatorsignals, so dass eine schnellere, robustere und exaktere Regelung des Regelkreises (Kompensation) erfolgen kann.

Da das System sehr tolerant bezüglich Abweichungen der Kopplung zwischen Kompensator und Empfänger (PD) ist, können in vielen Anwendungsfällen an dieser Stelle Toleranzen von 50% und mehr akzeptiert werden. Eventuelle größere chargen- oder herstellerabhängige Abweichungen des Leiterplattenmaterials wie z. B. des FR4-Materials können sehr gut und somit kostengünstig mit im IC integrierten oder diskret aufgebauten wenig aufwändigen elektronischen Zusatzfunktionen (z.B. Stromspiegel, Widerstände) ausgeglichen werden. Außerdem lässt sich jederzeit die tatsächliche optische KompensatorKopplung einfach in der bestückten Schaltung direkt in einem dafür geeigneten Testmodus mittels einer Oszilloskop-Messung direkt bestimmen.

In einer bevorzugten Ausführungsform ist die Kompensationslichtquelle wenigstens teilweise in der Leiterplatte integriert. In einer ebenso bevorzugten Ausführungsform ist die Kompensationslichtquelle vollständig in die Leiterplatte integriert. Beispielsweise kann die Kompensationslichtquelle in einer Sackbohrung angeordnet sein. Bei einer mehrlagigen Leiterplatte ist sie bevorzugt in einer der Innenlagen positioniert. Bei dieser Anordnung kann wenigstens eine der Innenlagen mit einer lichtundurchlässigen Schicht beschichtet sein, beispielsweise mit einer Metallisierung. Die lichtundurchlässige Schicht verhindert, dass ausgesandte Strahlung zu einem Messobjekt gelangt. Die von der Kompensationslichtquelle ausgesendete Strahlung gelangt dann zum Empfänger und tritt bevorzugt nicht aus der Leiterplatte heraus, jedenfalls nicht so, dass die Strahlung von einem Messobjekt reflektiert und erst dann zum Empfänger zurückgesendet wird.

Bei einer mehrlagigen Leiterplatte mit in einer der Innenlagen eingebetteten Kompensationslichtquelle sind die inneren Lagen der Leiterplatte zwischen der Kompensationslichtquelle und dem Empfänger (z. B. der Empfangsdiode oder Photodiode) bevorzugt nicht metallisiert oder mit anderen lichtundurchlässigen Schichten beschichtet. So wird eine optische Kopplung zwischen der Kompensationslichtquelle und dem Empfänger sichergestellt.

Alternativ kann die Kompensationslichtquelle auch in einer sogenannten Reverse-Montage auf der Leiterplatte aufgebaut sein. Eine auf der Außenseite der Leiterplatte angebrachte Beschichtung, typischerweise eine Kupferlage, weist dann eine Aussparung auf, durch die die Kompensationslichtquelle in das Platinenmaterial einstrahlen kann. Alternativ kann auch eine Sackbohrung, Durchgangsbohrung oder ähnliches vorgesehen sein, so dass ein besseres Einkoppeln des Kompensationslichtsignals in das Leiterplattenmaterial erfolgt. Es ist möglich, dass eine derartige Sackbohrung zumindest teilweise beschichtet ist, um die Lichtstrahlung der Kompensationslichtquelle entsprechend zu lenken. Die Kompensationslichtquelle kann in eine solche Bohrung hineinragen.

In einer weiteren bevorzugten Ausführungsform sind der Sender (z. B. LED) und/oder der Empfänger (z. B. Empfangsdiode) in Reverse-Montage auf der Platine aufgebaut. Der Sender sendet dann seine Lichtstrahlung durch eine Senderdurchgangsbohrung in der Leiterplatte hinaus, so dass das Licht durch die Leiterplatte hindurch abgestrahlt werden kann.

Bevorzugt weist die Senderdurchgangsbohrung ebenfalls einen Öffnungswinkel, der in den gleichen Bereichen wie der Öffnungswinkel der Durchgangsbohrung des Empfängers liegen kann. Der Öffnungswinkel der Sender-Durchgangsbohrung kann jedoch auch einen Winkel über 120 Grad aufweisen, beispielsweise bis ca. 150 Grad oder 160 Grad. Bevorzugt sind Winkel zwischen 80 Grad und 150 Grad, besonders bevorzugt 90 bis 120 Grad. Die Sender-Durchgangsbohrung ist bevorzugt innen beschichtet, insbesondere metallisiert, so dass sie jedenfalls für die ausgesandte Strahlung undurchsichtig ist. Beispielsweise kann eine Metallschicht oder eine Kupferschicht an der Bohrungsinnenseite vorgesehen sein.

Unbeschichtete und beschichtete Durchgangsbohrungen werden in der Elektrotechnik beim Aufbau von Platinen häufig verwendet. Sie sind im Stand der Technik bekannt und einfach und kostengünstig herzustellen. Diese als Vias bezeichneten Durchgangsbohrungen können dann sowohl für die Sender wie auch Empfänger verwendet werden, um eine kostengünstige Herstellung der optoelektronischen Messanordnung zu realisieren.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:

Figur 1    ein Prinzipschaltbild eines aus dem Stand der Technik bekannten Halios-Sensors mit elektrooptischer Grundkopplung;

Figur 2    eine erste Ausführungsform einer erfindungsgemäßen optoelektronischen Messanordnung, bei der ein Sender, ein Empfänger und eine Kompensationslichtquelle in Reverse-Montage angeordnet sind;

Figur 3    eine weitere bevorzugte Ausführungsform der optoelektronischen Messanordnung mit einer Leiterplatte, bei der die Kompensationslichtquelle teilweise in die Leiterplatte hineinragt;

Figur 4    eine Messanordnung mit einer mehrlagigen Leiterplatte und vollintegrierter Kompensationslichtquelle;

Figur 5    eine Aufsicht einer Leiterplatte mit Sender, Empfänger und Kompensationslichtquelle.

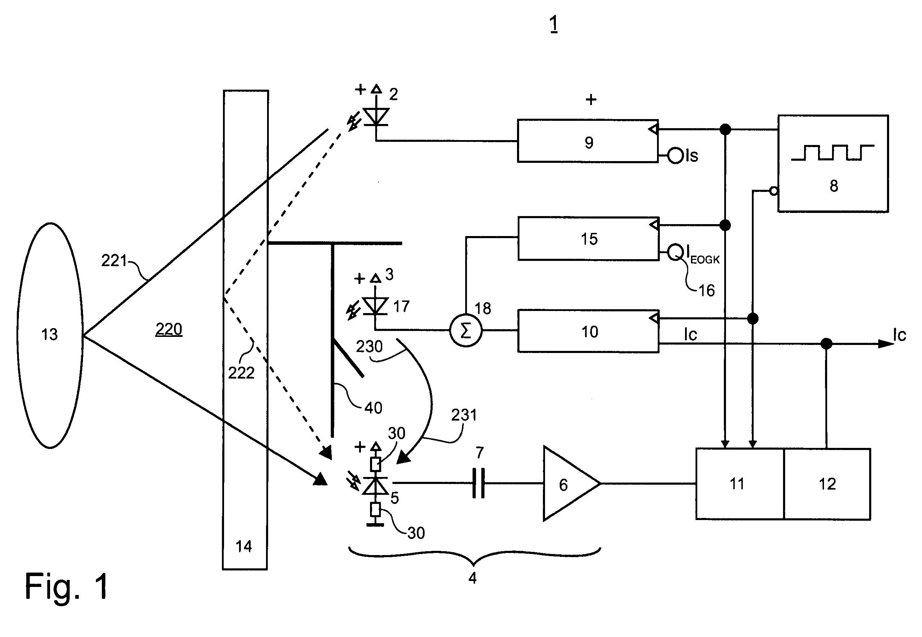

Fig. 1 zeigt das Prinzip einer opto-elektronischen Messanordnung 1 gemäß dem Stand der Technik mit einer Fremdlichtkompensation. Die Messanordnung 1 umfasst eine Sendelichtquelle 2 (Sender), eine Kompensationslichtquelle 3 (Kompensator) und eine optische Empfangseinheit 4, der eine Photodiode 5, einen Gyrator 30 (für die Ableitung von niederfrequenten Stromanteilen in der Photodiode), einen Transimpedanzverstärker 6 und einen Kondensator 7 einschließt. Ein Taktgenerator 8 taktet eine steuerbare Stromquelle 9, die die Sendelichtquelle 2 speist. Der Taktgenerator 8 liefert gleichzeitig ein invertiertes Taktsignal an eine steuerbare Kompensationsstromquelle 10, die die Kompensationslichtquelle 3 speist. Das Taktsignal und das invertierte Taktsignal werden einem Demodulator 11 zur taktsynchronen Auswertung des von der optischen Empfangseinheit 4 aufgrund des empfangenen Lichtsignals erzeugten Nutzsignalstroms zugeführt.

Eine Reglereinheit 12 erzeugt ein Ansteuersignal für die regelbare Kompensationsstromquelle 10, so dass bevorzugt die Kompensationslichtquelle 3 derart geregelt werden kann, dass der zwischen unterschiedlichen Phasen in der Empfangseinheit 4 auftretende taktsynchrone Nutzsignalstrom zu Null wird. Der Nutzsignalstrom beruht dabei auf den von der Sendelichtquelle 2 und der Kompensationslichtquelle 3 ausgesandten Lichtanteilen.

Die Sendelichtquelle 2 sendet ein Sendesignal in Form von sichtbarem oder nicht-sichtbarem Licht (Strahlung) in eine erste Übertragungsstrecke 220, wobei das Licht von der Empfangseinheit 4 nach Durchgang durch die Übertragungsstrecke 220 empfangen wird. Ist ein Messobjekt 13 in der Nähe der Messanordnung 1 (vor der (licht-) durchlässigen Sensorabdeckung 14) vorhanden, so wird von der Sendelichtquelle 2 ausgestrahltes Lichts an dem Messobjekt 13 reflektiert und zur Photodiode 5 zurückgesandt. Es entsteht eine funktionale Kopplung 221 durch das Messobjekt 13.

Ohne eine Abschirmung 40 würde ein Signalanteil von der Sendelichtquelle 2 direkt zu der Photodiode 5 gelangen. Der Signalanteil stellt die optische Grundkopplung 222 (gestrichelt gezeichnet) des Senders 2 dar. Die Abschirmung 40 verhindert die optische Grundkopplung 222. Sie wird in der gezeigten Ausführungsform gemäß Fig. 1 elektrisch durch eine regelbare Grundkopplungsstromquelle 15 erzeugt und folglich als elektro-optische Grundkopplung (EOGK) 231 bezeichnet. Die Grundkopplungsstromquelle 15 wird mit dem Taktsignal des Taktgenerators 8 getaktet und von einem Signalgeber 16, dem sogenannten Grundkopplungssignalgeber gespeist. Der erzeugte Grundkopplungssteuerstrom wird der Grundkopplungslichtquelle 17 zugeführt, die Licht direkt über eine zweite Übertragungsstrecke 230 zur Photodiode 5 überträgt. In der hier gezeigten Ausführungsform ist die Grundkopplungslichtquelle 17 die Kompensationslichtquelle 3 selbst. Sie ist die so geschaltet ist, dass sie abwechselnd, taktsynchron Lichtsignalanteile der Kompensationsphase als auch in der elektro-optischen Grundkopplung aussendet. Die Phase der Grundkopplungslichtquelle 17 ist gegenüber der Phase der Kompensationslichtquelle 3, die von der Kompensationsstromquelle 10 gespeist wird, phasenverschoben, bevorzugt um 180 Grad. Sie entspricht der Phase der Sendelichtquelle 2.

Da die Grundkopplungslichtquelle 17 und die Kompensationslichtquelle 3 das gleiche Bauelement sind, übernimmt die Kompensationslichtquelle 3 also beide Funktionen. Sie strahlt ein Kompensationssignal in Form von (sichtbarem oder nicht-sichtbarem) Licht in die zweite Übertragungsstrecke 230, die eine optische Kopplung 231 hat. Das Licht wird von dem Empfänger nach Durchgang durch die Übertragungsstrecke 230 empfangen. Die Kompensationslichtquelle 3 wird also von der regelbaren Kompensationsstromquelle 10 und von der Grundkopplungsstromquelle 15 gespeist. Die Steuerströme für die Grundkopplungsstromquelle 15 werden in einem Additionsbild 18 miteinander addiert und gemeinsam der Kompensationslichtquelle 3 zugeführt. Da die beiden Ströme phasenverschoben sind, ergibt sich ein überlagerter Steuerstrom.

Der Kompensationssteuerstrom wird zur Einstellung des Arbeitspunktes verwendet, wenn kein Messobjekt vor der Messanordnung 1 vorhanden ist. Er ist nur von der elektrooptischen Grundkopplung abhängig und wird somit nur durch den Grundkopplungssteuerstrom eingestellt. Dieses System hat viele Vorteile, da an Stelle einer rein optischen Grundkopplung zwischen der Sendelichtquelle 2 und der Empfangsdiode 4 bzw. Photodiode 5 eine vorbestimmbare und regelbare elektro-optische Grundkopplung 231 verwendet wird.

Mit der oben gezeigten Messanordnung ergibt sich unter der Bedingung, dass die rein optische Grundkopplung $D_{SG}$ 222 sehr viel kleiner als die elektrooptisch erzeugte Grundkopplung $D_{EOGK}$ 231 ist, die folgende Grundgleichung, die das Verhältnis von Kompensationssteuerstrom $I_C$ zu Sendesteuerstrom $I_S$ wiedergibt:

$$\frac{I_c}{I_s} = \frac{\eta_s}{\eta_c} \cdot \frac{D_{SF} + D_{EOGK}}{D_c}$$

Hierbei ist $\eta_S$ bzw. $\eta_C$ die jeweilige Effizienz der Sendelichtquelle 2 bzw. Kompensationslichtquelle 3. $D_{SF}$ ist die zu bestimmende funktionale optische Kopplung in der Übertragungsstrecke 220 durch das Messobjekt 13. Sie entspricht der zu vermessenden Übertragungseigenschaft der Übertragungsstrecke 220. $D_C$ ist die (konstante) optische Kompensatorkopplung in der zweiten Übertragungsstrecke 230. $D_{EOGK}$ ist die elektrooptisch erzeugte Grundkopplung.

Unter der weiteren Annahme, dass $\eta_S$ gleich oder annähernd gleich $\eta_C$ ist, vereinfacht sich die Gleichung zu:

$$\frac{I_c}{I_s} = \frac{D_{SF} + D_{EOGK}}{D_c}$$

$D_{EOGK}$ bestimmt also den Ruhe-Arbeitspunkt des Reglers und damit maßgeblich die Empfindlichkeit des Sensors.

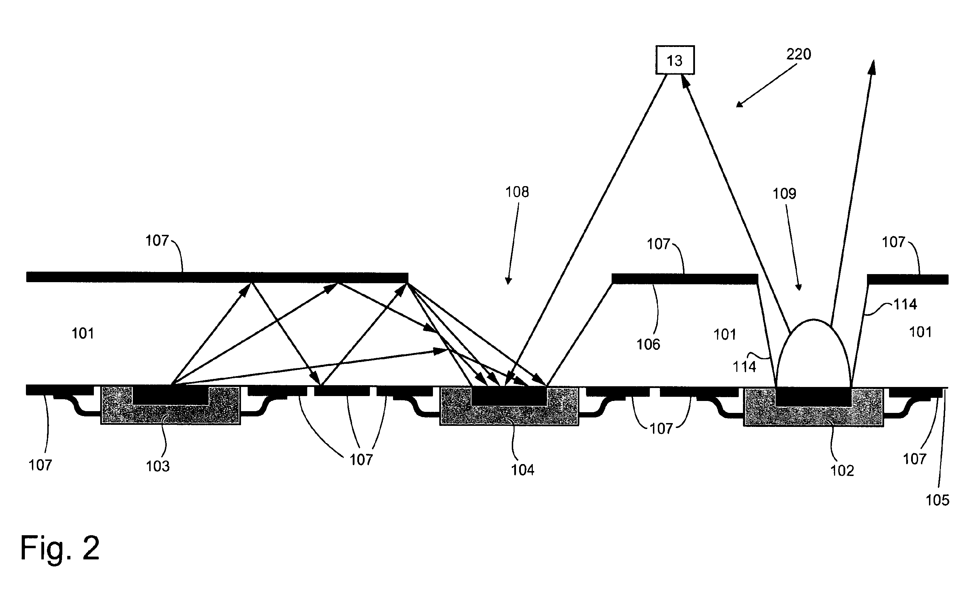

Fig. 2 zeigt eine technische Umsetzung einer erfindungsgemäßen opto-elektronischen Messanordnung. Sie wird am Beispiel eines oben beschriebenen Sensorsystems mit elektro-optischer Grundkopplung erläutert. Die notwendige Reglereinheit und andere Ansteuer- oder Leistungskomponenten sind aus Gründen der Übersichtlichkeit nicht gezeigt. Selbstverständlich ist die Aussendung eines getakteten Sende- oder Kompensationssignals nicht zwingend erforderlich sondern fakultativ.

Dargestellt ist die Realisierung der Messanordnung mit einer Leiterplatte 101, einer Sende-LED 102, die die Sendelichtquelle 2 ist, einer Kompensations-LED 103, die die Kompensationslichtquelle 3 ist und einer Empfangsdiode 104, die die Empfangseinheit 4 bzw. die Photodiode 5 repräsentiert. Die Verwendung von LEDs als Lichtquellen ist im Stand der Technik bekannt und weist einige Vorteile auf. Sie können beispielsweise IR-Strahlung aussenden. Selbstverständlich lassen sich auch andere Lichtquellen realisieren. Die Empfangsdiode 104 ist also im einfachsten Fall der Empfänger (Empfangseinheit) 4 selbst.

Gemäß Fig. 2 sind die Bauteile Sende-LED 102, Kompensations-LED 103 und Empfangsdiode 104 in einer sogenannten Reverse-Montage an der Leiterplatte 101 montiert. Die Bauteile sind bevorzugt alle an der gleichen Seite der Leiterplatte 101, bevorzugt an einer Unterseite 105 der Leiterplatte 101 angeordnet. Sowohl die Unterseite 105 wie auch die Oberseite 106 der Leiterplatte 101 sind mit einer Kupferschicht beschichtet. Bevorzugt ist die Oberseite 106 möglichst großflächig im Bereich der Kompensations-LED 103 und bevorzugt zusätzlich im Bereich der Empfangsdiode 104 mit einer Kupferlage 107 beschichtet. Auf der Unterseite 105 der Leiterplatte sind bevorzugt auch die entsprechenden Leiterbahnen und Signalbahnen angeordnet sind. Teilweise ist die Kupferschicht unterbrochen. Die Kupferbeschichtung oder eine andere metallische, leitende Beschichtung wird im Folgenden am Beispiel einer Kupferlage 107 erläutert. Selbstverständlich können auch andere (metallische) Schichten oder für die verwendete optische Strahlung nicht transparente Beschichtungen verwendet werden. In der Beschreibung werden auch Leiterbahnen oder Signalbahnen der Einfachheit halber als Kupferlage 107 bezeichnet.

Die Leiterplatte 101 besteht aus einem glasfaserverstärktem Polymer, bevorzugt einem Epoxidharz, besonders bevorzugt aus FR4-Materialund umfasst jedenfalls Glasfaserstücke. Sie wird als optisches System verwendet, um die von der Kompensations-LED 103 ausgesandte Strahlung zur Empfangsdiode 104 zu leiten. Hierdurch wird die elektrooptische Grundkopplung zwischen der Kompensations-LED 103 und der Empfangsdiode 104 gewährleistet. Die ausgesandte Lichtstrahlung läuft innerhalb des Leiterplattenmaterials und gelangt durch die Beschichtungen mittels der Kupferlage 107 an den Außenseiten (Unterseite 105 und Oberseite 106) nicht nach außen. So wird verhindert, dass Strahlung zu dem Messobjekt 13 gelangt und dort nach Reflexion zur Empfangsdiode 104 geleitet wird. Es wird somit (nahezu ausschließlich) eine Kopplung zwischen der Kompensations-LED 103 und dem Messobjekt 13 verhindert.

In einer bevorzugten Ausführungsform ist der Empfänger 104 an der Unterseite der Leiterplatte 101 angeordnet. Der Empfänger 104 sitzt dabei unterhalb einer Durchgangsbohrung 108, die durch die gesamte Leiterplatte 101, insbesondere ihre Dicke, reicht. Im Bereich der Empfangsdiode 104 weist die Leiterplatte 101 eine Durchgangsbohrung 108 auf, die bevorzugt als zylindrische Bohrung oder als Kegelsenkung ausgeführt sein kann, um von einem oberhalb der Oberseite 106 angeordneten Messobjekt 13 zurückgestrahlte Lichtstrahlung, beispielsweise infrarote Strahlung (IR-Strahlung), zu empfangen. Bevorzugt ist die Durchgangsbohrung 108 eine kegelförmige Bohrung mit einem Öffnungswinkel von höchstens 120°, bevorzugt von höchstens 90°, besonders bevorzugt von höchstens 60° und sehr bevorzugt von höchstens 45° hat. Besonders bevorzugt ist ein Öffnungswinkel von 90°. Der Öffnungswinkel ist bevorzugt von dem Empfänger (4, 104) weggewandt; die Bohrung weitet sich also zu der vom Empfänger weg gerichteten Seite auf. Je nach Ausführungsform der Empfangsdiode 104 kann sie plan an der Bohrung 108 anliegen oder in die Bohrung 108 hineinragen.

Oberhalb der Sende-LED 102 ist eine Sende-Durchgangsbohrung 109 angeordnet, die vorzugsweise zylindrisch ausgebildet ist. Auch sie kann durch eine Kegelsenkung erzeugt werden und einen Öffnungswinkel aufweisen, der bevorzugt zwischen Null und 150 Grad liegt, besonders bevorzugt bei etwa 90 Grad. Die Sende-Durchgangsbohrung 109 ist bevorzugt an ihrer Innenseite mit einer Beschichtung 114 beschichtet, so dass von der Sende-LED 102 ausgesandtes Licht durch die Leiterplatte 102 hindurchstrahlt, ohne in die Leiterplatte einzudringen. Auf diese Weise wird eine direkte Kopplung zwischen der Sende-LED 102 und der Empfangsdiode 104 durch die Leiterplatte 101 hindurch verhindert. Eine rein optische Grundkopplung zwischen Sender und Empfänger findet nicht statt, da diese durch die elektrooptische Grundkopplung, die von der Kompensations-LED 103 übernommen wird, ersetzt ist.

Im Bereich der Kompensations-LED 103 ist die Kupferlage 107 an der Unterseite 105 der Leiterplatte 101 entsprechend freigestellt. Auf diese Weise kann die ausgesandte Lichtstrahlung der Kompensations-LED 103 optimal in die Leiterplatte 101 eindringen. Durch die äußeren Kupferlagen an der Oberseite 106 und der Unterseite 105 wird das Licht innerhalb der Leiterplatte 101 geführt und gelangt so nach entsprechender Dämpfung und Streuung durch das Leiterplattenmaterial zu der Empfangsdiode 104. Durch geeignete Regelung kann die gewünschte elektrooptische Grundkopplung zwischen der Kompensations-LED 103 und der Empfangsdiode 104 hergestellt werden.

An der Empfangsdiode 104 (Empfänger) überlagern sich somit die Kompensationsstrahlung von der Kompensations-LED 103 und die reflektierte Strahlung, die von einem Messobjekt 13 außerhalb der Leiterplatte 101 reflektiert wird, nachdem das Messobjekt 13 von der Sende-LED 102 mit Infrarotstrahlung oder Licht beleuchtet wurde.

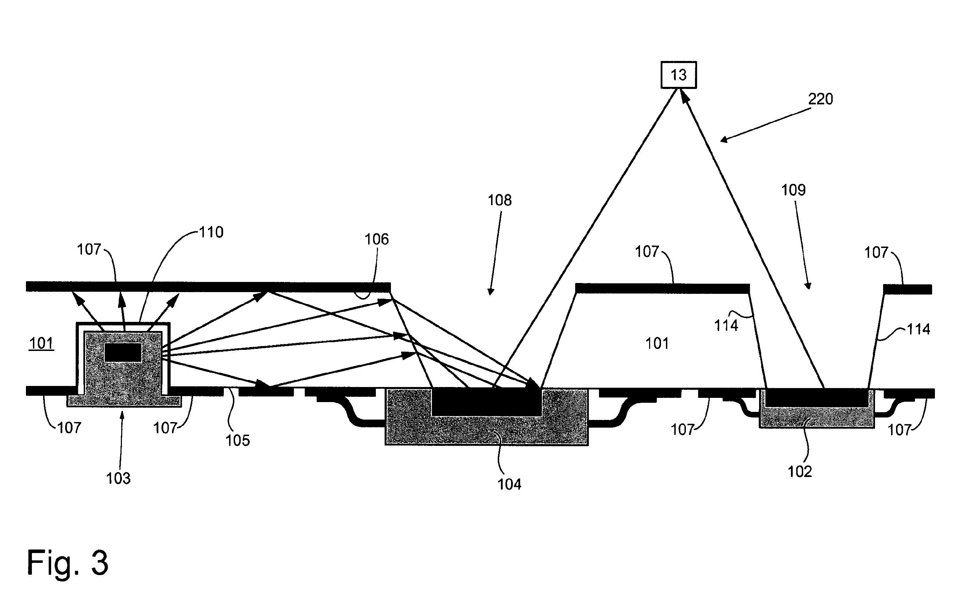

Die Kopplung zwischen der Kompensations-LED 103 und der Empfangsdiode 104 lässt sich verbessern, wenn die Kompensations-LED wenigstens teilweise in die Leiterplatte 101 hineinragt. Dazu ist beispielsweise, wie in Fig. 3 gezeigt, eine Sacklochbohrung bzw. ein Sackloch 110 in der Leiterplatte 101 vorgesehen, in die die Kompensations-LED 103 hineinstrahlt.

Die Kupferschicht (Cu) auf der Oberseite 106 der Leiterplatte 101 (PCB) gegenüber dem Sackloch 110 ist an dieser Stelle durchgängig geschlossen, so dass keine (optische) Strahlung von der Kompensations-LED 103 zum Messobjekt 13 gelangt und auch von diesem somit nicht beeinflusst werden kann. Selbst bei einfachen Leiterplatten mit nur zwei Kupferlagen (Doublelayer-Leiterplatte) ist meist eine der Lagen als Masse-Lage ausgeführt. Bei einer Multilayers-Leiterplatte wird mindestens eine Seite der Leiterplatte 101 mit einer möglichst großflächigen, geschlossenen Kupferschicht 107 ausgeführt, die ohnehin als Masselage verwendet wird und unter Gesichtspunkten der Störunempfindlichkeit der Schaltung bzw. Platine 101 und unter EMV-Gesichtspunkten beispielsweise als elektrische Schirmung eingesetzt wird. Dadurch wird der Aufwand folglich nicht erhöht und die ohnehin vorhandene Kupferschicht auch zur optischen Schirmung verwendet. Auch auf der Platinen-Unterseite 105 ist die Kupferfläche 107 weitestgehend geschlossen, so dass sie ebenfalls als "Spiegel" für die IR-Strahlung im Bereich zwischen Kompensator 103 und Photodiode (Empfangsdiode 104) fungiert. Es entsteht folglich eine Art optischer Wellenleiter innerhalb der Leiterplatte 101, mit anderen Worten, die Leiterplatte 101 an sich bildet einen optischen Wellenleiter.

In der hier dargestellten Realisierung ragt die Kompensations-LED 103 nicht in die Platine 101 hinein sondern liegt (wie z.B. im Falle einer in Versuchen verwendeten Diode vom Typ SFH4257R, Osram) plan an der Platinenunterseite 105 an und strahlt durch eine entsprechende Freistellung in der unteren Kupfer-Beschichtung 107 in das FR4-Material der Leiterplatte 101 ein.

Die Kompensation erfordert somit keinen zusätzlichen Bauraum über der Platine 101, was unter anderem sehr dünne Abdeckungen (geringe optische Sendergrundkopplung ~ hohe Empfindlichkeit/Reichweite) ermöglicht. Zudem kann die Photodiode/Empfangs-LED 104 bei Bedarf optimal durch ein einfaches, aus EMV-Gründen oft ohnehin vorhandenes Schirmblech gegen parasitäre Einstrahlung von (Streu-) Licht, auch von der Sende-LED 102 und von der Kompensations-LED 103, über die PCB-Rückseite 105 sehr gut optisch abgeschirmt werden.

Als Empfänger kommen alle Reverse-Typen von Photodioden (PD) in Frage. Je nach Anwendung kann die PD durch eine einfache (zylindrische) Bohrung oder auch durch eine Kegelsenkung sowohl die IR-Strahlung vom zu messenden Objekt als auch die Kompensations-Strahlung empfangen. Bevorzugt ist neben einer einfachen Bohrung auch eine kegelförmige Bohrung mit einem Öffnungswinkel von wenigstens 5°, bevorzugt wenigstens 20°, 30°, 45°, 60°, 90° oder 120°. Besonders bevorzugt ist ein Öffnungswinkel von wenigstens 10°. Die kegelförmige Bohrung ist bevorzugt so angeordnet und ausgebildet, dass das Kompensationslicht (Licht vom Kompensator), das Fremdlicht (Störlicht) und das Nutzsignallicht (das von einem Objekt 13 reflektierte Licht, das vom Sender 102 abgestrahlt wird) an nahezu der gleichen Stelle auf den Empfänger 104, insbesondere auf die photosensitive Chip-Fläche der Photodiode, auftreffen.

Anhand einer zweilagigen Testplatine wurde die Abhängigkeit der optischen Kompensatorkopplung in Funktion des Abstandes und einiger Randbedingungen (Vias, mit/ohne Kegelsenkung, Randlage auf der Leiterplatte, u.a.) bei den gegebenen IR-Komponenten untersucht. Es zeigten sich zwei maßgebliche Abhängigkeiten bei gegebenem FR4-Leiterplattenmaterial: die Dicke der Platine und der vorzugsweise einzuhaltende Abstand zwischen Kompensationslichtquelle und Empfänger. Je dicker die Platine ist, desto besser ist die optisch leitende Eigenschaft und desto mehr Kompensationssignal erreicht den Empfänger und desto größer kann bzw. muss der Abstand zwischen Kompensator und Empfänger sein. Bei relativ dünnen Platinen, insbesondere wenn der Kompensator nicht in einer Sacklochbohrung hineinragt sondern plan an der Platine angeordnet ist, muss der Abstand zwischen Kompensator und Empfänger vergleichsweise klein sein (z.B. kleiner etwa 20% des obengenannten Abstands).

Die Erfindung ermöglicht die Bereitstellung der Kompensation in bekannten HALIOS-Sensoren also ohne dedizierten (eigenständigen) Lichtleiter und ohne relevante technische Forderungen und/oder Bedingungen an die Opto-Mechanik einer Sensorabdeckung. Dies führt schließlich zu einer Realisierung von kompakteren, insbesondere flacheren, sowie einfacheren (und damit kostengünstigeren) HALIOS-Sensoren als bislang.

In einer bevorzugten Ausführungsform ist die Kompensations-LED 103 wenigstens teilweise in der Sackbohrung 110 integriert (wie z.B. im Falle einer Diode vom Typ HT-260IRPJ des Herstellers Harvatek). Bevorzugt wird die Kompensations-LED 103 vollständig oder nahezu vollständig von der Sackbohrung 110 aufgenommen.

Bezugnehmend auf Fig. 3 wird deutlich, wie die von der Kompensations-LED 103 ausgesendete Lichtstrahlung an den Kupferlagen 107 der Oberseite 106 und der Unterseite 105 reflektiert wird. Beim Austritt aus dem FR4-Material der Leiterplatte 101 in die Empfängerdurchgangsbohrung 108 werden die Lichtstrahlen so gestreut, dass die Strahlen in ausreichender Intensität und zuverlässig reproduzierbar zu der Empfangsdiode 104 gelangen. Der Austritt der Strahlung von der Kompensations-LED 103 aus der Öffnung 108 in Richtung eines Messobjekts 13, das oberhalb der Oberseite 106 der Leiterplatte 101 angeordnet ist, ist vernachlässigbar gering, so dass er in wenigen Zentimetern Entfernung von der Öffnung 108 ohne Bedeutung für die praktische Anwendung ist.

Deutlich zu erkennen ist, dass die Empfangsdiode 104 nicht nur die Strahlung von der Kompensations-LED 103 empfängt. Vielmehr überlagert sich in dem gleichen sensitiven Bereich der Empfangsdiode 104 auch die Strahlung, die von der Sende-LED 102 ausgesandt und vom Messobjekt 13 reflektiert wird.

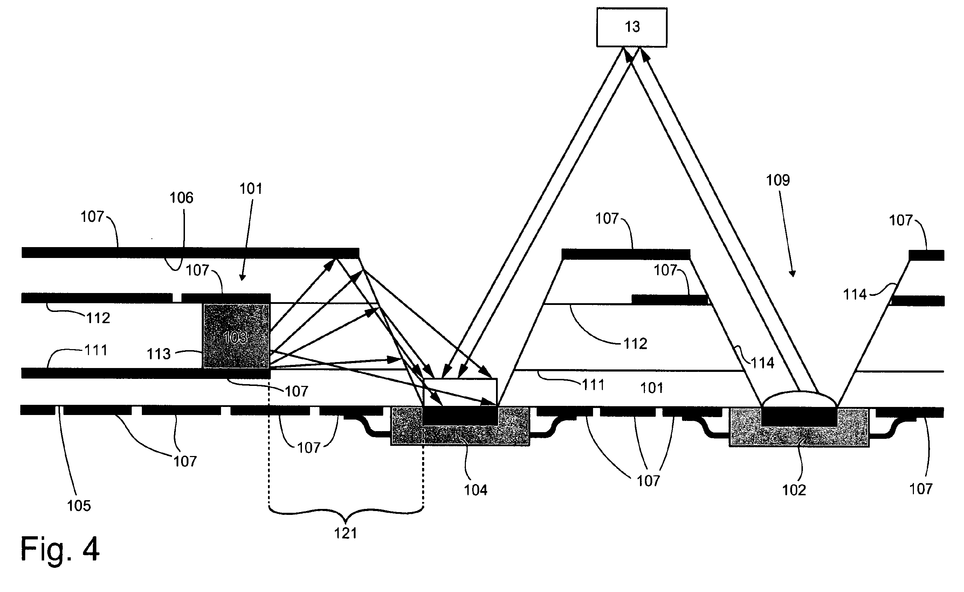

Fig. 4 zeigt eine Ausführungsform der erfindungsgemäßen optoelektronischen Messanordnung mit einer vierlagigen Leiterplatte 110. Zwischen den beiden Innenlagen 111, 112 ist ein Hohlraum 113 vorgesehen, in dem die Kompensations-LED 103 bzw. der Kompensator aufgenommen ist. Die Innenlagen 111 und 112 sind so ausgebildet, dass die von der Kompensations-LED 103 ausgesandte Strahlung zur Empfangsdiode 104 geleitet werden kann. In der gezeigten Ausführungsform weist die innere Lage (Innenlage 111) keine Kupferlage 107 in dem Bereich 121 zwischen der Kompensationslichtquelle bzw. Kompensations-LED 103 und dem Empfänger bzw. der Empfangsdiode 104 auf. Es ist auch keine andere Metallisierung oder lichtundurchlässige Schicht in diesem Bereich 121 vorhanden. Hierdurch wird sichergestellt, dass von der Kompensations-LED 103 ausgesandte Lichtstrahlung die Empfangsdiode 104 erreicht. Die ausgesendete Strahlung wird in dem optischen System Leiterplatte geleitet, da die Glasfaserstücke des Leiterplattenmaterials, z. B. FR4-Material, eine hinreichend gute optische Leitung gewährleisten. Die in dem Material entstehende Streuung hat keinen negativen Einfluss auf das System, im Gegenteil, die Diffusität gewährleistet die gewünschte homogene (gleichmäßige) Ausleuchtung des sensitiven Bereichs der Empfangsdiode (z.B. Photodiode) und trägt somit zur guten Reproduzierbarkeit des Sensors bei.

Bei einer Leiterplatte mit mehreren Kupferlagen (Innenlagen) ist es wichtig, dass im Bereich 121 zwischen der Kompensations-LED 103 und der Empfangs-LED 104 die Kupferbeschichtung auf den Innenlagen 111, 112 im Sinne einer möglichst guten Transmission weitgehend ausgespart wird. Auch alle andere lichtsperrenden Elemente (Vias, Bohrungen, u.a.) sind aus diesem Bereich vorzugsweise herauszuhalten.

In der Ausführungsform gemäß Fig. 4 ist zu erkennen, dass die Sende-Durchgangsbohrung 109 ebenfalls einen zur Oberseite 106 der Leiterplatte 101 aufgeweiteten Öffnungswinkel aufweist. Hierdurch lässt sich ein größerer Bereich unmittelbar vor der Leiterplatte 101 vom Sender ausleuchten. Damit kann Gestik nahe am Sensor noch richtig erkannt werden.

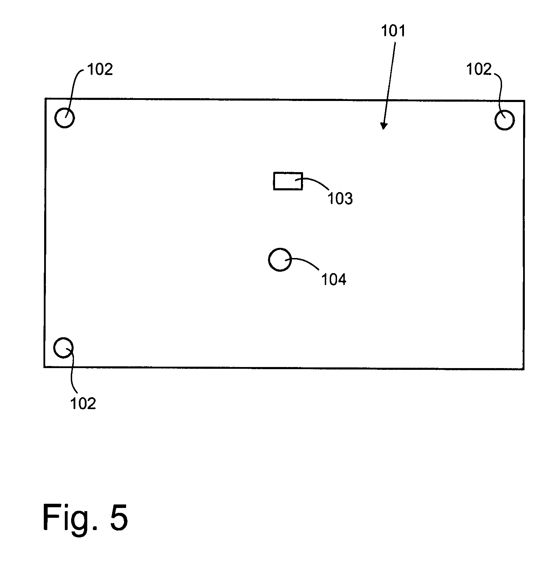

Fig. 5 zeigt eine Draufsicht auf eine Leiterplatte 101 der erfindungsgemäßen Messanordnung. In drei Ecken der Leiterplatte 101 sind mehrere Sende-LEDs 102 angeordnet. Die Auswertung der Signale der räumlich unterschiedlich angeordneten Sender ermöglicht, nicht nur das Vorhandensein von Objekten vor bzw. oberhalb der Leiterplatte 101 zu detektieren, sondern auch Bewegungen, deren Richtung, einfache Entfernungsänderungen, Annäherungen, Gesten im Allgemeinen oder Ähnliches zu realisieren.

Die Empfangsdiode 104 ist vorzugsweise in einem Bereich der Mitte der Leiterplatte 101 angeordnet, so dass ihr Abstand zu den drei Sende-LEDs ähnlich und bevorzugt möglichst gleich ist. Selbstverständlich ist es auch möglich, die Empfangsdiode 104 an einem anderen Ort zu positionieren. Bei derartigen asymmetrischen Anordnungen wird bevorzugt ein Abgleich der unterschiedlichen Abstände der Empfangsdiode zu den einzelnen Sende-LEDs in dem Regler vorgenommen.

Die Kompensations-LED 103 ist bevorzugt näher bei der Empfangsdiode 104 angeordnet als die Sende-LEDs 102.

Im Rahmen der Erfindung hat sich gezeigt, dass die Kompensationsdiode bzw. die Kompensations-LED 103 insbesondere bei einer Leiterplattenstärke von 1 mm bis 2 mm (z.B. 1,55 mm) vorzugsweise von dem Empfänger bzw. der Empfangsdiode 104 wenigstens 5 mm, besonders bevorzugt wenigstens 7 mm entfernt ist. Es hat sich auch gezeigt, dass die Entfernung zwischen den beiden Elementen vorzugsweise höchstens 15 mm beträgt, besonders bevorzugt höchstens 10 mm, sehr bevorzugt höchstens 9 mm. Diese Entfernungsangaben sind jedoch abhängig von dem Diodentyp, dem Material und der Dicke der Leiterplatte 101, wie bereits oben erläutert.

**Patentansprüche**

1. Opto-elektronische Messanordnung, mit einem optischen Sender (2), einem optischen Kompensationssender (3) und einem optischen Empfänger (4) zur Vermessung der Übertragungseigenschaften einer ersten Übertragungsstrecke (220) zwischen dem Sender (2) und dem Empfänger (4), wobei

   - der Sender (2) ein Sendesignal in die Übertragungsstrecke (220) sendet, das nach Durchgang durch mindestens einen Teil der ersten Übertragungsstrecke (220) von dem Empfänger (104) detektiert wird,
   - der Kompensationssender (3) ein Kompensationssignal in eine zweite Übertragungsstrecke (230) sendet, das von dem Empfänger nach Durchgang durch die zweite Übertragungsstrecke (230) detektiert wird,
   - der Empfänger (104) ausgebildet und eingerichtet ist, um das Sendesignal und das Kompensationssignal linear zu überlagern und daraus ein Empfängerausgangssignal zu bilden,
   - eine Reglereinheit (12), die aus dem Empfängerausgangssignal ein Kompensationssteuersignal zur Ansteuerung des Kompensationssenders (3) und/oder ein Sendersteuersignal zur Ansteuerung des Senders (2) zur rückkoppelnden Regelung des Empfängerausgangssignals derart erzeugt, dass bei einer Änderung der Übertragungseigenschaften der ersten Übertragungsstrecke (220) das Empfängerausgangssignal im Wesentlichen unverändert bleibt;
   **dadurch gekennzeichnet, dass** die Kopplung zwischen dem Kompensationssender (3) und dem Empfänger (104) wenigstens teilweise über ein optisches System in einer Leiterplatte (101) erfolgt, an der der Kompensationssender (3) und der Empfänger (104) angeordnet sind.

2. Opto-elektronische Messanordnung nach Anspruch 1, **dadurch gekennzeichnet, dass** die zweite Übertragungsstrecke (230) das optische System in der Leiterplatte (101) umfasst.

3. Opto-elektronische Messanordnung nach einem der vorhergehenden Ansprüche, **dadurch gekennzeichnet, dass** die optische Kopplung zwischen dem Kompensationssender (3, 103) und dem Empfänger (4, 104) größtenteils oder ausschließlich über das optische System in einer Leiterplatte (101) erfolgt.

4. Opto-elektronische Messanordnung nach einem der vorhergehenden Ansprüche, **dadurch gekennzeichnet, dass** das optische System ein kompensatorisches, optisches Lichtleitersystem ist, das bevorzugt die Leiterplatte (101) selbst ist.

5. Opto-elektronische Messanordnung nach einem der vorhergehenden Ansprüche, **dadurch gekennzeichnet, dass** der Kompensationssender (3, 103) wenigstens teilweise in der Leiterplatte (101) integriert ist.

6. Opto-elektronische Messanordnung nach einem der vorhergehenden Ansprüche, **dadurch gekennzeichnet, dass** die Leiterplatte (101) eine mehrlagige Leiterplatte ist und der Kompensationssender (3, 103) in einer der inneren Lagen (111, 112) integriert ist, wobei die inneren Lagen (111, 112) der Leiterplatte (101) zwischen dem Kompensationssender (3, 103) und dem Empfänger (4, 104) bevorzugt keine Metallisierung, insbesondere keine Kupferlagen (107), aufweisen.

7. Opto-elektronische Messanordnung nach einem der vorhergehenden Ansprüche 1 bis 3, **dadurch gekennzeichnet, dass** der Kompensationssender (3, 103) in Reverse-Montage an der Leiterplatte (101) angebaut ist und durch eine Aussparung in der äußeren Kupferlage (107) in die Leiterplatte (101) einstrahlt.

8. Opto-elektronische Messanordnung nach einem der vorhergehenden Ansprüche, **dadurch gekennzeichnet, dass** der Empfänger (4, 104) an der Unterseite (105) der Leiterplatte (101) unterhalb einer Durchgangsbohrung (108) angeordnet ist, die bevorzugt zylindrisch oder kegelförmig ist und weiter bevorzugt einen von dem Empfänger (4, 104) weggewandten Öffnungswinkel von höchstens 120°, bevorzugt von höchstens 90°, besonders bevorzugt von 90° und sehr bevorzugt von höchstens 45° hat.

9. Opto-elektronische Messanordnung nach einem der vorhergehenden Ansprüche, **dadurch gekennzeichnet, dass** die Leiterplatte (101) aus einem glasfaserverstärktem Polymer, bevorzugt aus einem glasfaserverstärktem Epoxidharz, besonders bevorzugt aus FR-4-Material besteht und bevorzugt an der Oberseite (106) und/oder der Unterseite (105) wenigstens teilweise mit einer metallischen Schicht, bevorzugt mit einer Kupferlage (107), bedeckt ist.

10. Opto-elektronische Messanordnung nach einem der vorhergehenden Ansprüche, **dadurch gekennzeichnet, dass** der Kompensationssender (3, 103) von dem Empfänger (4, 104) wenigstens 5 mm, bevorzugt wenigstens 7 mm entfernt ist und/oder bevorzugt höchstens 15 mm entfernt ist.

11. Opto-elektronische Messanordnung nach einem der vorhergehenden Ansprüche, **dadurch gekennzeichnet, dass** die Durchgangsbohrung (109) für den Sender (2, 102) innen metallisiert ist, bevorzugt mit einer Metallschicht, besonders bevorzugt mit einer Kupferschicht an der Bohrungsinnenseite überzogen ist.

12. Opto-elektronische Messanordnung nach einem der vorhergehenden Ansprüche, **dadurch gekennzeichnet, dass** der Abstand zwischen dem Sender (2, 102) und Empfänger (4, 104) größer ist als der Abstand zwischen dem Kompensationssender (3, 103) und dem Empfänger (4, 104).

13. Opto-elektronische Messanordnung nach einem der vorhergehenden Ansprüche, **dadurch gekennzeichnet, dass**

- der Sender (2, 102) und der Kompensationssender (3, 103) Licht zeitsequentiell getaktet, phasenweise aussenden, wobei das ausgesendete Licht jeweils - vorzugsweise um 180° - gegeneinander phasenverschoben ist,
- die Messanordnung einen Taktgenerator (8) zur Erzeugung eines Taktsignals, einen Demodulator (11) zur taktsynchronen Auswertung des Empfängerausgangssignals, eine regelbare Stromquelle (9) zur Erzeugung eines getakteten Sendersteuerstroms für den Sender (2, 102) und eine regelbare Kompensations-Stromquelle (10) zur Erzeugung eines getakteten Kompensationssteuerstroms für den Kompensationssender (3, 103), aufweist und
- die Reglereinheit (12) zur Erzeugung wenigstens eines Ansteuersignals für die regelbare Stromquelle (9) und/oder Kompensationsstromquelle (10) so ausgebildet ist, dass der Kompensationssender (3, 103) und/oder der Sender (2, 102) durch Steuerung des Kompensationssteuerstroms und/oder des Sendesteuerstroms in ihrer Lichtintensität in der Amplitude derart regelbar ist, dass die zwischen den unterschiedlichen Phasen auftretende taktsynchrone Signaldifferenz zu Null wird.

**Claims**

1. Opto-electronic measuring arrangement comprising an optical transmitter (2), an optical compensation transmitter (3) and an optical receiver (4) for measuring the transmission properties of a first transmission path (220) between the transmitter (2) and the receiver (4), wherein

    - the transmitter (2) emits an emission signal along the transmission path (220), which signal is detected by the receiver (104) after It has traversed at least a part of the first transmission path (220),
    - the compensation transmitter (3) emits a compensation signal along a second transmission path (230), which signal is detected by the receiver after it has traversed the second transmission path (230),
    - the receiver (104) is designed and configured to superimpose the transmitter signal and the compensation signal in linear manner and to form a receiver output signal therefrom,
    - a control unit (12) that generates a compensation control signal from the receiver output signal for actuating the compensation transmitter (3) and/or a transmitter control signal for actuating the transmitter (2) for feedback-controlled adjustment of the receiver output signal in such a manner that the receiver output signal remains substantially unchanged if the transmission properties of the first transmission path (220) are changed;
    **characterized in that** the coupling between the compensation transmitter (3) and the receiver (104) is performed at least partially via an optical system in a printed circuit board (101) on which the compensation transmitter (3) and the receiver (104) are both arranged.

2. Opto-electronic measuring arrangement according to claim 1, **characterized in that** the second transmission path (230) comprises the optical system in the printed circuit board (101).

3. Opto-electronic measuring arrangement according to any one of the preceding claims, **characterized in that** the optical coupling between the compensation transmitter (3, 103) and the receiver (4, 104) takes place mostly or entirely via the optical system in a printed circuit board (101).

4. Opto-electronic measuring arrangement according to any one of the preceding claims, **characterized in that** the optical system is a compensating, optical light conductor system, which is preferably the printed circuit board (101) itself.

5. Opto-electronic measuring arrangement according to any one of the preceding claims, **characterized in that** the compensation transmitter (3, 103) is at least partly integrated in the printed circuit board (101).

6. Opto-electronic measuring arrangement according to any one of the preceding claims, **characterized in that** the printed circuit board (101) is a multilayer printed circuit board, and the compensation transmitter (3, 103) is integrated in one of the inner layers (111, 112), wherein the inner layers (111, 112) of the printed circuit board (101) preferably have no metallizing, particularly no copper layers (107), between the compensation transmitter (3, 103) and the receiver (4, 104).

7. Opto-electronic measuring arrangement according to any one of the preceding claims 1 to 3, **characterized in that** the compensation transmitter (3, 103) is mounted on the printed circuit board (101) in reverse assembly, and emits light into the printed circuit board (101) through a cutaway in the outer copper layer (107).

8. Opto-electronic measuring arrangement according to any one of the preceding claims, **characterized in that** the receiver (4, 104) is arranged below a through-hole (108) on the underside (105) of the printed circuit board (101), which through-hole Is preferably cylindrical or conical, and also preferably has an opening angle facing away from the receiver (4, 104) of no more than 120°, preferably no more than 90°, particularly preferably of 90°, and very preferably of no more than 45°.

9. Opto-electronic measuring arrangement according to any one of the preceding claims, **characterized In that** the printed circuit board (101) consists of a glass fibre reinforced polymer, preferably a glass fibre reinforced epoxy resin, particularly preferably of FR-4 material, and that preferably the upper side (106) and/or the underside (105) thereof is at least partly covered with a metallic layer, preferably with a copper layer (107).

10. Opto-electronic measuring arrangement according to any one of the preceding claims, **characterized in that** the compensation transmitter (3, 103) is at a distance of at least 5 mm, preferably at least 7 mm and/or preferably no more than 15 mm from the receiver (4, 104).

11. Opto-electronic measuring arrangement according to any one of the preceding claims, **characterized in that** the inside of the through-hole (109) for the transmitter (2, 102) is metallised, preferably covered with a metal layer, particularly preferably with a copper layer on the inside of the borehole.

12. Opto-electronic measuring arrangement according to any ane of the preceding claims, **characterized In that** the distance between the transmitter (2, 102) and the receiver (4, 104) is greater than the distance between the compensation emitter (3, 103) and the receiver (4, 104).

13. Opto-electronic measuring arrangement according to any one of the preceding claims, **characterized in that**

- the transmitter (2, 102) and the compensation transmitter (3, 103) emit light time-sequentially and in a phased manner, wherein the emitted light is phase-shifted, preferably by 180°,
- the measuring arrangement comprises a clock generator (8) for generating a clock signal, a demodulator (11) for synchronous evaluation of the receiver output signal, a controllable current source (9) for generating a clocked transmitter control current for the transmitter (2, 102) and a controllable compensation current source (10) for generating a clocked compensation control current for the compensation transmitter (3, 103), and
- the controller unit (12) for generating at least one actuation signal for the controllable current source (9) and/or the compensation current source (10) is constructed in such a manner that the light intensity of the compensation transmitter (3, 103) and/or the transmitter (2, 102) is controllable in the amplitude thereof by adjusting the compensation control current and/or the transmitter control current in such a manner that the synchronous signal difference arising between the different phases becomes zero.

**Revendications**

1. Système de mesure opto-électronique comportant un capteur optique (2), un émetteur de compensation optique (3) et un récepteur optique (4) pour mesurer les caractéristiques de transmission d'un premier trajet de transmission (220) entre l'émetteur (2) et le récepteur (4),

- l'émetteur (2) envoyant dans le trajet de transmission (220) un signal d'émission qui est détecté par le récepteur (104) après avoir parcouru au moins une partie du premier trajet de transmission (220),
- l'émetteur de compensation (3) envoyant dans un deuxième trajet de transmission (230) un signal de compensation qui est détecté par le récepteur après avoir parcouru le deuxième trajet de transmission (230),

- le récepteur (104) étant conçu et configuré pour superposer linéairement le signal d'émission et le signal de compensation et pour former sur cette base un signal de sortie de récepteur,

- une unité de réglage (12) qui génère, à partir du signal de sortie de récepteur, un signal de commande de compensation pour commander l'émetteur de compensation (3) et/ou un signal de commande d'émetteur pour commander l'émetteur (2) pour le réglage rétroactif du signal de sortie de récepteur de manière telle qu'en cas de modification des caractéristiques de transmission du premier trajet de transmission (220) le signal de sortie de récepteur reste sensiblement inchangé,

**caractérisé en ce que** le couplage entre l'émetteur de compensation (3) et le récepteur (104) s'effectue au moins en partie via un système optique sur une carte de circuits imprimés (101) sur laquelle sont montés l'émetteur de compensation (3) et le récepteur (104).

2. Système de mesure opto-électronique selon la revendication 1, **caractérisé en ce que** le deuxième trajet de transmission (230) inclut le système optique sur la carte de circuits imprimés (101).

3. Système de mesure opto-électronique selon l'une des revendications précédentes, **caractérisé en ce que** le couplage optique entre l'émetteur de compensation (3, 103) et le récepteur (4, 104) s'effectue en majeure partie ou exclusivement via le système optique sur une carte de circuits imprimés (101).

4. Système de mesure opto-électronique selon l'une des revendications précédentes, **caractérisé en ce que** le système optique est un système de guide de lumière optique compensatoire qui est de préférence la carte de circuits imprimés (101) elle-même.

5. Système de mesure opto-électronique selon l'une des revendications précédentes, **caractérisé en ce que** l'émetteur de compensation (3, 103) est intégré au moins en partie dans la carte de circuits imprimés (101).

6. Système de mesure opto-électronique selon l'une des revendications précédentes, **caractérisé en ce que** la carte de circuits imprimés (101) est une carte de circuits imprimés multicouche et **en ce que** l'émetteur de compensation (3, 103) est intégré dans l'une des couches intérieures (111, 112), les couches intérieures (111, 112) de la carte de circuits imprimés (101) entre l'émetteur de compensation (3, 103) et le récepteur (4, 104) ne présentant préférentiellement pas de métallisation, et notamment pas de couches de cuivre (107).

7. Système de mesure opto-électronique selon l'une des revendications précédentes 1 à 3, **caractérisé en ce que** l'émetteur de compensation (3, 103) est monté en montage inversé sur la carte de circuits imprimés (101) et irradie dans la carte de circuits imprimés (101) par un évidement dans la couche de cuivre extérieure (107).

8. Système de mesure opto-électronique selon l'une des revendications précédentes, **caractérisé en ce que** le récepteur (4, 104) est agencé sur la face inférieure (105) de la carte de circuits imprimés (101) en dessous d'un perçage traversant (108) qui est préférentiellement cylindrique ou conique et présente en outre préférentiellement un angle d'ouverture opposé au récepteur (4, 104) de 120° au maximum, préférentiellement de 90° au maximum, de manière particulièrement préférentielle de 90° et très préférentiellement de 45° au maximum.

9. Système de mesure opto-électronique selon l'une des revendications précédentes, **caractérisé en ce que** la carte de circuits imprimés (101) se compose d'un polymère renforcé de fibre de verre, préférentiellement d'une résine époxy renforcée de fibre de verre, de manière particulièrement préférentielle de matériau FR-4, et est recouverte, de préférence sur sa face supérieure (106) et/ou sur sa face inférieure (105), au moins en partie d'une couche métallique, préférentiellement d'une couche de cuivre (107).

10. Système de mesure opto-électronique selon l'une des revendications précédentes, **caractérisé en ce que** l'émetteur de compensation (3, 103) est éloigné d'au moins 5 mm, préférentiellement d'au moins 7 mm et/ou préférentiellement de 15 mm au maximum du récepteur (4, 104).

11. Système de mesure opto-électronique selon l'une des revendications précédentes, **caractérisé en ce que** le perçage traversant (109) pour l'émetteur (2, 102) est métallisé à l'intérieur, et est revêtu préférentiellement d'une couche de métal, de manière particulièrement préférentielle d'une couche de cuivre sur la face intérieure du perçage.

12. Système de mesure opto-électronique selon l'une des revendications précédentes, **caractérisé en ce que** la distance entre l'émetteur (2, 102) et le récepteur (4, 104) est supérieure à la distance entre l'émetteur de compensation (3, 103) et le récepteur (4, 104).

13. Système de mesure opto-électronique selon l'une des revendications précédentes, **caractérisé en ce que** :

- l'émetteur (2, 102) et l'émetteur de compensation (3, 103) émettent de la lumière par phases et de manière cadencée en séquences temporelles, la lumière émise présentant respectivement un déphasage réciproque de préférence de 180° ;

- le système de mesure comporte un générateur d'horloge (8) pour générer un signal d'horloge, un démodulateur (11) pour l'évaluation synchrone à l'horloge du signal de sortie de récepteur, une source de courant réglable (9) pour générer un courant de commande d'émetteur cadencé pour l'émetteur (2, 102) et une source de courant de compensation réglable (10) pour générer un courant de commande de compensation cadencé pour l'émetteur de compensation (3, 103) et

- l'unité de réglage (12) pour générer au moins un signal de commande pour la source de courant réglable (9) et/ou la source de compensation réglable (10) est conçue de telle sorte que l'émetteur de compensation (3, 103) et/ou l'émetteur (2, 102) peuvent être réglés de manière telle en amplitude dans leur intensité lumineuse, par commande du courant de commande de compensation et/ou du courant de commande d'émission, que la différence de signal synchrone à l'horloge qui survient entre les différentes phases devient nulle.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5666037 A
- EP 0706648 B1
- EP 1671160 B1
- DE 10001955 A1
- EP 2418512 A1